**Europäisches Patentamt**

**European Patent Office**

**Office européen des brevets**

(19)

(11) Veröffentlichungsnummer: **0 302 367 B1**

(12) # EUROPÄISCHE PATENTSCHRIFT

(45) Veröffentlichungstag der Patentschrift:
17.07.91 Patentblatt 91/29

(51) Int. Cl.⁵: **F16L 57/00**

(21) Anmeldenummer: **88112074.5**

(22) Anmeldetag: **27.07.88**

(54) Schutzkappe zum Abdecken von Flanschen.

(30) Priorität: **06.08.87 DE 3726165**

(43) Veröffentlichungstag der Anmeldung:
**08.02.89 Patentblatt 89/06**

(45) Bekanntmachung des Hinweises auf die
Patenterteilung:
**17.07.91 Patentblatt 91/29**

(84) Benannte Vertragsstaaten:
**AT BE DE FR GB IT LU NL**

(56) Entgegenhaltungen:
**DE-A- 1 525 790**
**DE-A- 3 031 687**
**US-A- 4 379 472**

(73) Patentinhaber: **PROTEC GMBH**
**Hammerbrookstrasse 93**
**W-2000 Hamburg 1 (DE)**

(72) Erfinder: **Brenning, Dieter**
**Amselweg 5**
**W-2107 Rosengarten-Klecken (DE)**

(74) Vertreter: **Glaeser, Joachim, Dipl.-Ing. et al**
**Patentanwälte DIEHL GLAESER HILTL &**
**PARTNER Königstrasse 28**
**W-8000 Hamburg 50 (DE)**

EP 0 302 367 B1

**Beschreibung**

Die Erfindung bezieht sich auf eine Spritzkunststoff-Schutzkappe nach dem Oberbegriff des Patentanspruches 1.

Rohre, Behälter, Ventile od. dgl. mit Rohrstutzen müssen bis zum Einbau gegenüber Transportbeschädigungen und Verunreinigungen geschützt werden. In einigen Bereichen der Industrie wird von Chemieunternehmen in diesem Zusammenhang eine bindende Werksnorm vorgeschrieben. Bislang waren durch die verwendeten Schutzkappen jedoch lediglich der Innenraum des Rohres und der Rezess des Flansches geschützt, der äußere Bereich des Flansches selbst jedoch nicht. Beim Reinigen eines Gehäuses mit Rohrstutzen erwiesen sich die bekannten Schutzkappen insofern nachteilig, als sie mit Hilfe des Reinigungsmittelstrahles von ihrem vorgesehenen Sitz ungewollt entfernt werden konnten. Die Verwendung von Rohrstopfen in dem o.a. Zusammenhang ist deshalb nicht sinnvoll, weil dessen Außendurchmesser präzise an den Innendurchmesser angepaßt sein müßte, wobei je nach Einsatzzweck mehr oder weniger dicke Innenrohrbeschichtungen auftreten können.

Es ist eine Schutzkappe (Verschlußstopfen) zum Abdecken des Flansches eines Rohres od.dgl. beim Transport und während des Lagerung bis zum Einbau in eine Anlage bekannt (DE-A-1 525 790), bei welcher an einer Scheibe ein axial vorstehender Stopfen mit Schlitzen und radial nach außen vorstehende Wulste ausgebildet sind, um mit einem Rohrende einen federnden Preßsitz zu erzeugen.

Der Erfindung liegt die Aufgabe zugrunde, die bekannten Schutzkappen so zu verbessern, daß der Flansch lückenlos gegenüber mechanischen Beschädigungen geschützt werden kann, wobei ein einwandfreier Sitz der Schutzkappe gewährleistet sein sollte.

Erreicht wird dies durch eine Schutzkappe nach den Patentansprüchen.

Das Prinzip der Erfindung ist darin zu sehen, daß die Schutzkappe mit hintergreifenden Teilen ausgebildet ist, die den Flansch umgreifen, was sich aber nur durch ein Spritzgußverfahren realisieren läßt. Dabei ist die Schutzkappe so ausgestaltet, daß sie vom Flansch entfernt werden kann, und hierbei erwiesen sich Schlitze oder Scharniere, aber auch Abrißlinien als besonders vorteilhaft.

Bei einer besonderen Ausführungsform der Erfindung sind Griffe am Außenumfang des Randes angeordnet, die mit oder ohne Werkzeug erfaßt werden können, so daß eine leichtere Demontage der Schutzkappe vom Flansch möglich ist. Dieser Vorgang kann noch durch sich in Umfangsrichtung erstreckende Kerbrillen verstärkt werden, an denen die Hintergreifungsteile umgebogen werden können, ohne daß sie sich vollständig von dem verbleibenden Teil der Schutzkappe lösen.

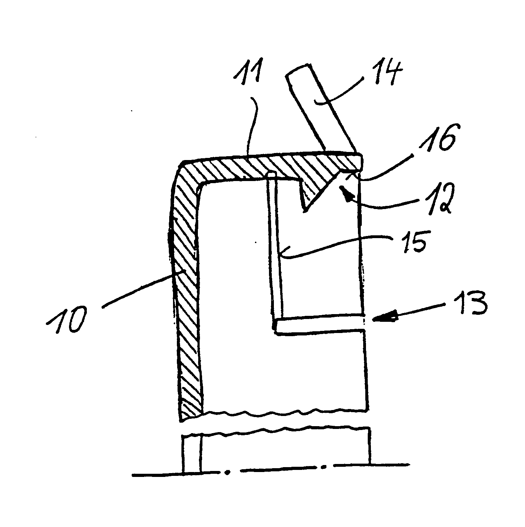

Die Erfindung wird nachstehend an Hand der Zeichnung beispielsweise erläutert.

Die einzige Figur zeigt eine unmaßstäbliche Querschnittsansicht.

In der Figur ist mit 10 der scheibenförmige Teil einer Schutzkappe gezeigt, welcher dazu dient, eine Rohröffnung, den Rezess und den Dichtungsbereich eines Flansches abzuschließen. Am Außenumfang der Scheibe 10 steht ein Rand 11 in axialer Richtung vor. Dieser ist in seinem inneren Bereich mit einer Hinterschneidung 12 ausgebildet. Der Winkel zwischen Rand und Hinterschneidung kann 90° aber auch mehr betragen. Am äußeren Umfang des Randes 11 ist eine Kante 16 vorgesehen, die es der Bedienungsperson ermöglicht, zentrifugal gerichtete Kräfte auf die Kappe auszuüben.

Am äußeren Umfang ist ein Kraftantriffsteil 14 gezeigt, es können mehrere, vorzugsweise drei, dieser Teile am Umfang vorgesehen sein. Der Teil 14 kann mit Hilfe eines Werkzeuges erfaßt werden, er kann auch eine Fingeröffnung aufweisen, so daß man mit Hilfe des Fingers nach außen gerichtete Kräfte auf den Rand 11 der Schutzkappe ausüben kann.

Mit 13 ist ein Bereich bezeichnet, dessen besondere Ausgestaltung und Wirkung noch erläutert wird. Im einfachsten Fall kann dieser Bereich als Schlitz ausgebildet sein.

Im Inneren des Randes 11 befinden sich Kerbrillen 15, die als Soll-Anbruchstelle dienen, wenn die Hinterschneidung 12 mit Hilfe des Griffteiles 14 nach außen gebogen wird.

Die Schutzkappe wird über einen Flansch geschoben, wobei die Hinterschneidung 12 für einen sicheren Sitz auf dem Flansch sorgt. Soll die Schutzkappe entfernt werden, so müssen axial nach außen gerichtete Kräfte auf die Hinterschneidung 12 an einem oder mehreren Teilen des Umfangs ausgeübt werden. Dies kann über die Teile 16 oder 14 erfolgen.

Der Bereich 13 kann als Filmscharnier ausgebildet sein, er kann ebensogut als Soll-Bruchstelle, Perforations-oder Kerblinien oder als Schlitz ausgebildet sein.

In jedem Fall sorgen über den Umfang der Schutzkappe verteilte Bereiche 13 dafür, daß die Schutzkappe über den Flansch hinweg entfernt werden kann.

Die Verwendung von Schlitzen könnte eine Beschädigung des Flansches in dem entsprechenden Bereich nicht ausschließen, daher sind Filmscharniere oder nicht durchgehende Kerblinien insofern besser. Allerdings kann ein Schlitz auch so ausgestattet werden, daß seine Begrenzungsflächen nicht auf das Zentrum der Scheibe, sondern vielmehr in Sekantenrichtung ausgebildet sind. Dadurch wird die Wahrscheinlichkeit gering, daß ein spitzer Gegenstand dort eindringen könnte.

Als Material kommt Polyäthylen vorrangig in Frage, und zwar sowohl vom Typ HD als auch LD.

**Patentansprüche**

1. Flansch-Schutzkappe zum Abdecken des Flansches eines Rohres, eines Flansches an einem Behälter, an einem Ventil od. dgl. beim Transport und während der Lagerung bis zum Einbau in eine Anlage, wobei eine Scheibe am Flansch angeordnet ist und die Bohrung und den Rezeß des Flansches abdeckt, dadurch gekennzeichnet, daß die Schutzkappe durch ein Kunststoff-Spritzgußverfahren hergestellt worden ist, die Scheibe (10) am Außenumfang mit einem zur Scheibe axial vorstehenden Rand (11) ausgebildet ist, der Rand an seinem freien Ende mit einem im wesentlichen radial nach innen vorspringenden als Greifrorsprung ausgebildeten Hinterschneidungsteil (12) ausgebildet ist und daß der Rand (11) und/oder der Hinterschneidungsteil (12) mit über die Umfangsfläche verteilten Bereichen (13) herabgesetzter Wanddicke in Form von Schlitzen, Kerblinien, Sollbruchstellen, Perforationen, Filmscharnierteilen od. dgl. ausgebildet ist.

2. Schutzkappe nach Anspruch 1, dadurch gekennzeichnet, daß die Bereiche (13) axial oder schräg axial erstreckend ausgebildet sind.

3. Schutzkappe nach Anspruch 1 oder 2, dadurch gekennzeichnet, daß die als Schlitze (13) ausgebildeten Bereiche radiale oder nicht radiale, insbesondere in Sekantenrichtung, ausgebildete Seitenbegrenzungen aufweisen.

4. Schutzkappe nach Anspruch 3, dadurch gekennzeichnet, daß die Greifvorsprünge (16) am Hinterschneidungsteil (12) axial nach außen gerichtet ausgebildet sind.

5. Schutzkappe nach einem der Ansprüche 1 bis 4, dadurch gekennzeichnet, daß im Bereich der axialen Endbegrenzung der Bereiche (13) sich in Umfangsrichtung erstreckende Nuten (15) oder Kerben befinden.

6. Schutzkappe nach einem der Ansprüche 1 bis 5, dadurch gekennzeichnet, daß außen am Rand (11) oder dem Hinterschneidungsteil (12) mindestens ein, vorzugsweise schräg vorstehender, Kraftangriffsvorsprung (14) ausgebildet ist.

7. Schutzkappe nach einem der Ansprüche 1 bis 6, dadurch gekennzeichnet, daß mindestens zwei, vorzugsweise 6 oder 12 Bereiche (13) vorgesehen sind.

8. Schutzkappe nach einem der Ansprüche 1 bis 7, dadurch gekennzeichnet, daß der Hinterschneidungsteil (12) in einem Winkel von 95° zum Rand (11) ausgerichtet ist.

**Claims**

1. Protecting cap to cover the flange of a tube, a flange at a vessel, at a valve or the like during transport and during storage until it is installed into a machinery, a disc being arranged at the flange and covering the bore and the recess of the flange, characterized in that the protecting cap has been produced by plastic injection molding, the disc (10) at the outer circumference being provided with a rim (11) projecting axially in respect of the disc, the free end of the rim being provided with an undercut part (12) formed as gripping projection salient in substantially radial direction to the inside, and that the rim (11) and/or the undercut part (12) is provided over the circumference with areas (13) of reduced wall thickness in form of slots, indented lines, predetermined breaking points, perforations, film hinge elements or the like.

2. Protecting cap according to claim 1, characterized in that the areas (13) extend in axial or axially inclined direction.

3. Protecting cap according to claim 1 or 2, characterized in that the areas formed as slots (13) comprise radial or non-radial, particularly in secant direction, transverse boundaries.

4. Protecting cap according to claim 3, characterized in that the gripping projections (16) at the undercut part (12) are directed axially to the outside.

5. Protecting cap according to any one of claims 1 to 4, characterized in that within the area of the final axial limitation of the areas (13) there are disposed grooves (15) or notches extending in circumferential direction.

6. Protecting cap according to any one of claims 1 to 5, characterized in that outside at the rim (11) or at the undercut part (12) there is provided at least one, preferably inclined salient projection (14) for the application of power.

7. Protecting cap according to any one of claims 1 to 6, characterized in that at least two, preferably 6 or 12 areas (13) are provided.

8. Protecting cap according to any one of claims 1 to 7, characterized in that the undercut part (12) is aligned in an angle of 95° to the rim (11).

**Revendications**

1. Capot protecteur pour recouvrir la bride d'un tube, ou une bride prévue sur un récipient, une vanne ou analogue, lors du transport et pendant le stockage jusqu'au montage dans une installation, capot dans lequel un plateau est placé contre la bride, et recouvre l'alésage et le rentrant de la bride, caractérisé en ce que le capot est obtenu par un procédé de moulage par injection de matière synthétique, le plateau (10) porte, sur sa périphérie, un bord (11) en saillie axiale par rapport audit plateau, ce bord porte à son extrémité libre une partie (12) en contre-dépouille avançant essentiellement radialement vers l'intérieur et en forme de saillie d'accrochage, et en ce que le bord (11) et/ou la partie en contre-dépouille (12) présente des zones (13), réparties sur sa surface périphérique, à épaisseur de paroi réduite, en forme de fentes, lignes d'entailles, zone de rupture, perforations, parties en membrane formant charnière ou analogues.

2. Capot protecteur selon la revendication, caractérisé en ce que les zones (13) s'étendent axialement ou obliquement par rapport à l'axe.

3. Capot protecteur selon la revendication 1 ou 2, caractérisé en ce que les zones (13), en forme de fente, sont limitées par des surfaces latérales radiales ou non radiales, notamment orientées dans une direction secante.

4. Capot protecteur selon la revendication 3, caractérisé en ce que les saillies d'accrochage (16) de la partie en contre-dépouille (12) sont dirigées axialement vers l'extérieur.

5. Capot protecteur selon l'une des revendications 1 à 4, caractérisé en ce que des rainures (15) ou des entailles s'étendent en direction périphérique sont disposées dans la région de l'extrémité axiale des zones (13).

6. Capot protecteur selon l'une des revendications 1 à 5, caractérisé en ce qu'au moins un saillant (14) d'application de force, s'étendant de préférence obliquement, est disposé à l'extérieur sur le bord (11) ou la partie en contre-dépouille (12).

7. Capot protecteur selon l'une des revendications 1 à 6, caractérisé en ce qu'il est prévu au moins deux, de préférence six ou douze zones (13).

8. Capot protecteur selon l'une des revendications 1 à 7, caractérisé en ce que la partie en contre-dépouille (12) fait un angle de 95° avec le bord (11).